# EUROPEAN PATENT APPLICATION

(11) **EP 2 067 452 A1**
(43) Date of publication of application: **10.06.2009**
(21) Application number: 08164357.9
(22) Date of filing: 15.09.2008
(51) Int. Cl.: A61C 7/36, A61C 7/10

(54) **Orthodontic device**

(30) Priority: 04.12.2007 NL 2001045
(71) Applicant: BV/BVBA L. Govaert Orthodontist, 9880 Aalter (BE)
(72) Inventor: Govaert, Luc Maria Prudent, 4504 RD, Nieuwvliet (NL)
(74) Representative: D'Halleweyn, Nele Veerle Trees Gertrudis

(57) **Abstract**

Orthodontic device for activating the growth of the lower jaw for use in combination with fixed orthodontic appliances, comprising two plastic bodies, each provided with at least one counter-surface corresponding to the chewing surface of molars in the upper jaw, and at least one counter-surface corresponding to the chewing surface of molars in the lower jaw, and further attaching means for attaching to the upper jaw, wherein each plastic body comprises at least two parts which can be displaced and fixed relative to each other substantially parallel to the longitudinal direction of the respective counter-surfaces, wherein each part is provided with at least one of said counter-surfaces.

## Description

The present invention relates to an orthodontic device for activating the growth of the lower jaw, comprising two plastic bodies, each provided with at least one counter-surface corresponding to the chewing surface of molars in the upper jaw and at least one counter-surface corresponding to the chewing surface of molars in the lower jaw, and further attaching means for attaching to the upper jaw.

Orthodontic deviations, such as for instance an irregular position of teeth and/or jaws, occur frequently and can result in functional and aesthetic problems. An irregular position of the teeth or the jaws can thus result in, among other things, impaired speech development, problems with chewing and problems with teeth and gums.

Orthodontic deviations can be divided mainly into two categories. A first category relates to an irregular position of the teeth. A second category of defects is related to an incorrect growth of the jaws. Jaws can for instance grow too quickly or too slowly. In addition, jaws can also grow too much to the left or the right, or asymmetrically. Combinations of deviations in the position of the teeth and the jaws are further also possible.

Braces are generally known in orthodontics and are used to prevent and treat an irregular position of the teeth, the jaws and combinations thereof. Different types of brace adapted to the orthodontic deviation to be treated are known to the person with ordinary skill in the art. Braces can thus be divided for instance into extra-oral and intra-oral appliances. In the extra-oral appliances the braces run partially outside the mouth, this being referred to as an external brace (also face-bow or headgear). The intra-oral appliances can be mainly divided removable retainers) are substantially understood to mean the braces which the patient can remove from the mouth him/herself in simple manner during the brace treatment. Fixed orthodontic appliances are however not intended to be removed by the patient him/herself and are for instance braces which are bonded to the teeth by means of mutually connected blocks (also referred to as brackets).

There are further also functional appliances. These are used to correct an incorrect position of the jaws. Included in the functional appliances is for instance the so-called activator (also referred to as block retainer) . An activator is a removable retainer which consists substantially of a part specifically for the upper jaw and a part specifically for the lower jaw, and can thus be considered to be a twin retainer. Such a retainer stimulates the forward growth of the lower jaw (ventral direction) and is used particularly in the case of underdeveloped growth of the lower jaw. Different types of activator and retainer derived therefrom are known, each having their own characteristic features. Different types of orthodontic appliance are frequently also combined during a treatment.

A significant problem of the known activators used in combination with fixed appliances is their high susceptibility to wear and breakages during the treatment period. The activator can often not withstand the forces exerted thereon by the jaw muscles, particularly those occurring in bruxism (grinding of the teeth). In addition, the fixed appliance to which some activators are attached can also be damaged by the use of the activator. These problems may also be caused by the manner of attaching the activator to the fixed appliance, for instance when this takes place by means of anchoring in so-called headgear tubes.

Another problem of known activators is the lack of a simple method of accurate adjustment, and particularly activation in forward direction, of the activator during the orthodontic treatment when the activator is no longer sufficiently active due to the growth of the jaw.

The present invention has for its object to largely solve or reduce the above stated problems to a minimum by providing an orthodontic device for use preferably in combination with fixed orthodontic appliances, comprising two plastic bodies, each provided with at least one counter-surface corresponding to the chewing surface of molars in the upper jaw, and at least one counter-surface corresponding to the chewing surface of molars in the lower jaw, which device is distinguished in that each plastic body comprises at least two parts which can be displaced and fixed relative to each other substantially parallel to the longitudinal direction of the respective counter-surfaces, wherein each part is provided with at least one of said counter-surfaces. Since these parts can be displaced and fixed relative to each other, the activator can be precisely adjusted, in particular activated, during the course of the orthodontic treatment. Because the forces exerted by the jaws moreover engage directly on said counter-surfaces, these forces can be better absorbed by the activator, which is thereby less susceptible to wear and breakages. The counter-surfaces, which are intended to lie against the chewing surface of the molars when the activator is placed in the mouth, can be adjusted during the orthodontic treatment by means of a suitable cutter. This for instance for the purpose of limiting undesirable interference between counter-surface and chewing surface, or enabling minimal dental arch adjustments with the fixed appliance. The counter-surfaces can further be subdivided into different part-surfaces, or be interrupted. In this text the term "plastic body" must be broadly interpreted as comprising at least two plastic parts. The term "molars" can in this text optionally comprise one or more of the front molars (premolars (P1,P2)) and/or regular molars (molars (M1,M2)).

According to a preferred embodiment of the device according to the present invention, the parts of the two plastic bodies comprising at least one counter-surface corresponding to the chewing surface of molars of the upper jaw can optionally also comprise one or more counter-surfaces corresponding to molars of the lower jaw. According to a more preferred embodiment according to the present invention, each of the two plastic bodies comprises two of said parts, of which one part is provided in each case with one counter-surface corresponding to the chewing surface of molars of the upper jaw and one counter-surface corresponding to the chewing surface of molars of the lower jaw, and of which another part is provided in each case with one counter-surface corresponding to the chewing surface of molars of the lower jaw. According to yet another preferred embodiment, each of the two plastic bodies is provided with one counter-surface corresponding to the chewing surface of molars in the upper jaw and one counter-surface corresponding to the chewing surface of molars in the lower jaw, wherein each plastic body comprises two of said parts, of which one part is provided in each case with the counter-surface corresponding to the chewing surface of molars of the upper jaw, and of which another part is provided in each case with the counter-surface corresponding to the chewing surface of molars of the lower jaw.

According to a further development of the device according to the present invention, the parts of the two plastic bodies which are only provided with one or more counter-surfaces corresponding to the chewing surface of molars in the lower jaw can be connected via a retainer body. According to a preferred embodiment, the retainer body is situated on the lingual side of the front teeth when placed in the mouth. According to other possible embodiments, the retainer body can be situated at other positions when placed in the mouth, for instance on the buccal side of the teeth (cheek side or outer side of the teeth), or along the palate. The retainer body is preferably formed from plastic. In addition, the retainer body can also be formed from metal or a combination of plastic and metal. Since the parts which are provided in each case with the counter-surfaces corresponding to the chewing surfaces of the molars in the upper jaw are moreover preferably connected to each other only via the retainer body, via the parts only provided with one or more counter-surfaces corresponding to the chewing surface of molars in the lower jaw, the first mentioned parts can be displaced substantially independently of each other parallel to the longitudinal direction of the respective counter-surfaces, and an expansion of the upper jaw and/or the upper dental arch can in this way be brought about. This expansion is desirable when a more forward position of the lower jaw is obtained, in order to maintain a good transverse balance of the dental arches. The longitudinal directions of the respective counter-surfaces corresponding to the chewing surface of the molars particularly in the upper jaw can here run roughly in the form of a V relative to each other.

In accordance with a development according to the present invention, a connection between the two plastic bodies, for instance in the form of a retainer body, can in addition be omitted in the activator. The plastic bodies can then each be fixed separately here to the upper jaw or lower jaw by means of suitable attaching means.

According to a further development of the device according to the present invention, the retainer body can be provided with at least one other counter-surface, for instance embodied in plastic and/or metal, corresponding to the teeth of the lower jaw. According to an embodiment, this counter-surface can also be interrupted, or consist of a plurality of part-surfaces. In a preferred embodiment the counter-surface substantially corresponds to the inward directed side (also referred to as the lingual side or tongue side) of the teeth of the lower jaw, in particular canines and incisors.

According to a further development, the activator according to the present invention can further be provided with means for attaching to the upper jaw, which means are for instance formed from curved wire-like bonders (for instance consisting substantially of a curved wire from a suitable material such as for instance a suitable metal). According to a further development, at least one or more bonders can here comprise a wire part running substantially parallel to the longitudinal direction of the respective counter-surfaces corresponding to the chewing surface of the molars. The wire part can preferably also be substantially parallel to the longitudinal direction of the side surface of the molars or premolars when the activator is placed correctly in the mouth. The activator can hereby be placed in and removed from the mouth in simple manner, wherein there is a smaller chance of damage to both the activator and the fixed appliance. A further advantage is time-saving during placing of the braces by the patient or the practitioner. Tube bonders and button bonders are particularly suitable as attaching means. Other attaching means are also possible for attaching the activator to the upper jaw, for instance other or differently curved metal bonders or wire parts. According to a preferred embodiment, at least one of the attaching means engages on fixed (orthodontic) appliances. According to a more preferred embodiment, at least two of the attaching means engage on fixed (orthodontic) appliances. Attaching means can for instance also further comprise adhesives and/or magnetic parts.

The present invention relates to a (removable) activator, preferably for use in combination with fixed orthodontic appliances. In addition, the activator can also be used in combination with for instance only a number of components of fixed orthodontic appliances. In this application the term "fixed (orthodontic) appliances" thus also includes suitable parts to which the activator can be attached, without these parts necessarily forming part of a complete fixed appliance.

The activator can preferably also be used in combination with extra-oral orthodontic appliances, such as for instance a high-pull headgear. Because the headgear tubes on the fixed appliance are not used to attach the activator during placing of the activator according to the present invention, they remain free and, if desired, can be used for placing of an extra orthodontic brace, for instance a headgear (external brace). This headgear is often desirable together with the activator. Tilting of the occlusion surface (biting surface between the molars) is particularly prevented in the case of larger corrections of dental overbites (sagittally). An external brace may also be desirable for the purpose of intruding (moving upward and rearward) the upper front (upper teeth) in the case of a deep dental bite. According to a further development of the activator, headgear tubes can optionally also be arranged in the activator.

The functional orthodontic activator according to the present invention will activate substantially forward growth of the lower jaw (ventral direction). Due to the form of the activator the patient must bite down with the lower jaw forward. A sagittal overbite hereby gradually becomes smaller due to shape modification of the lower jaw during growth, substantially at the position of the mandibular condyles.

The activator can further also be used to treat an asymmetrical growth of the lower jaw.

The invention will be further described with reference to the accompanying drawings, which show preferred embodiments which are in no way intended to limit the scope of protection of the claims, and in which:
Figure 1 shows a substantially lateral perspective view of a preferred embodiment of the orthodontic device;
Figure 2 shows a substantially perspective view in which a preferred embodiment of the orthodontic device is attached to the upper jaw.

Figures 3-9 show further embodiments of the present invention.

Reference symbols are chosen such that they are the same for similar or the same elements or properties in different figures or drawings.

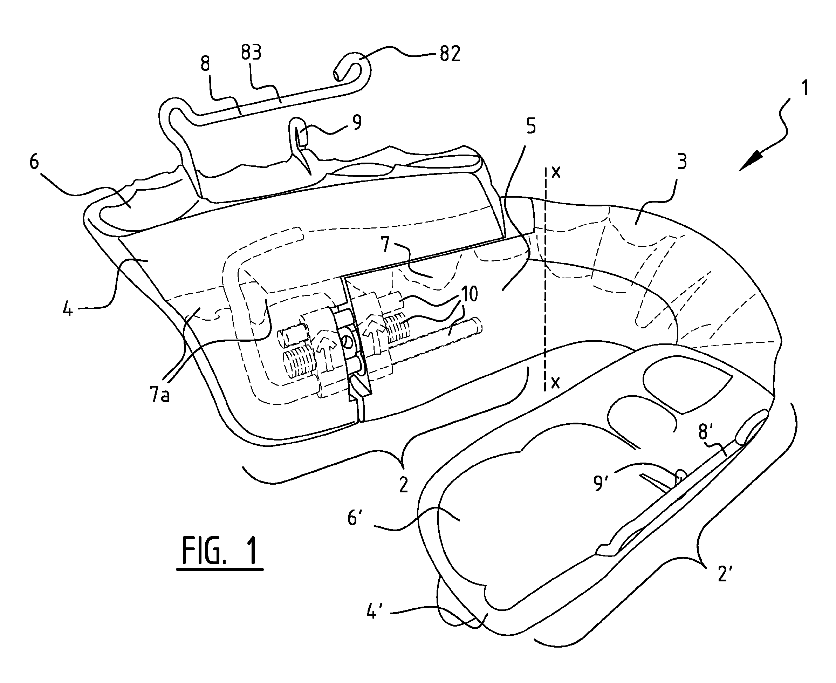

Figure 1 shows a preferred embodiment of activator 1 according to the present invention. The shown activator 1 comprises two plastic bodies 2 and 2', mutually connected via a third body 3. Plastic bodies 2 and 2' each comprise two plastic parts displaceable relative to each other. For plastic body 2 this is shown in Fig. 1, in which plastic body 2 is shown as being assembled from plastic parts 4 and 5, wherein part 5 is bounded on one side by the line X-X, which is preferably situated at the position of the incisors. Analogously to plastic body 2, plastic body 2' according to the preferred embodiment in Fig. 1 likewise comprises two plastic parts, of which only the part, i.e. 4', of plastic body 2' corresponding to part 4 of plastic body 2 is visible. In the further description substantially the same applies by analogy for plastic body 2' as for plastic body 2, and also for the components which only differ in their numbering by an apostrophe. In the preferred embodiment shown in Fig. 1 plastic part 4 is provided with a counter-surface 6 corresponding to the chewing surface of molars in the upper jaw, and also with a counter-surface 7a, preferably though not necessarily corresponding to the chewing surface of molars in the lower jaw. In other embodiments according to the present invention the counter-surfaces can be interrupted or subdivided into a plurality of part-surfaces. Counter-surface 7a (and analogously also the not shown counter-surface 7' a) can preferably be trimmed with a synthetic resin cutter when the activator is activated, since after activation this counter-surface no longer fully corresponds with the occlusal surface of the molars. It will thus be apparent herefrom that counter-surface 7a does not necessarily have to correspond with a chewing surface of molars in the lower jaw. If necessary, the other counter-surfaces can of course optionally also be trimmed in this and other ways. In other embodiments (not shown) plastic part 4 may for instance not comprise a counter-surface corresponding to the chewing surface of molars in the lower jaw. In the preferred embodiment shown in Fig. 1 plastic part 5 is further provided with another counter-surface 7 corresponding to the chewing surface of molars in the lower jaw other than the molars with the chewing surface which in the first instance preferably corresponds to counter-surface 7a.

The two plastic bodies 2 and 2' are also provided with attaching means 8, 8', 9 and 9' for attaching the orthodontic device to the upper jaw. These attaching means 8, 8', 9 and 9' preferably consist of a suitable metal. These attaching means more preferably consist of a suitable metal in wire form. Various appropriate metals and other materials which can be employed for this purpose are known to the person with ordinary skill in the art. The attaching means preferably comprise curved wire-like bonders. In the shown embodiment use is made of a tube bonder which consists of a wire part which runs substantially parallel to the longitudinal direction of the respective counter-surfaces corresponding to the chewing surface of the molars, and which is retained at the position of a tube of the fixed appliance. The bonders shown by way of example in Fig. 1 are tube bonders 8 (comprising wire part 82 and a freestanding end 83) and 8' (comprising wire part 82' and a freestanding end 83') and button bonders (9 and 9'). These bonders allow a simple adjustment with a view to a correct placing of the orthodontic device in the mouth of the patient by both the practitioner and the patient. These attaching means or bonders moreover also make it possible to remove the activator from the mouth in simple manner, for instance for eating or brushing the teeth. It will be apparent to the person with ordinary skill in the art that other forms are also possible for the attaching means or bonders which can be used for the activator according to the present invention.

The two plastic parts 4 and 5 on the one side and the two plastic parts 4' and 5' (not shown) on the other are also mutually connected by means of connecting elements. These connecting elements can comprise, among others, screws and/or pins, are preferably formed from a suitable metal and are generally known to the person with ordinary skill in the art. These connecting elements 10 are shown in Fig. 1 only for plastic body 2. It will be apparent that the two plastic parts 4' and 5' (not shown) can be mutually connected in analogous manner. Other connecting elements or forms could also be used for mutual connection of the two plastic parts 4 and 5 on the one side and 4' and 5' on the other.

Plastic part 5 and 5' (not shown in Fig. 1), which are only provided with a counter-surface corresponding to the chewing surface of molars in the lower jaw, are further connected via a retainer body 3. According to the preferred embodiment shown in Fig. 1, plastic parts 5 and 5' (not shown in Fig. 1) and retainer body 3 are manufactured integrally, preferably formed from plastic. It will be apparent that it is also possible according to the present invention for these parts 5, 5' and body 3 to comprise separate parts attached to each other. In addition, retainer body 3 can also consist of a suitable metal, for instance in the form of a curved metal bar, or a combination of plastic and metal. Retainer body 3 can further have a counter-surface which corresponds to a number of teeth of the lower jaw, preferably canines and incisors. The counter-surface of retainer body 3 more preferably corresponds to the inward directed side (lingual side) of the canines and incisors of the lower jaw. In another embodiment this counter-surface can be interrupted. The retainer body can further be adjusted in order to provide overcapping of the lower front (comprising the incisors and canines of the lower jaw) . Such embodiments can be used to prevent the possible and so-called tipping (an effect in which the lower teeth begin to slope forward as a result of for instance pressure exerted by the activator against the inner side of the lower front) . In such embodiments the retainer body can also comprise a counter-surface for the upper side of a number of teeth of the lower jaw, preferably the lower front or at least several of the teeth forming the lower front. In such embodiments the retainer body can also comprise a further counter-surface for at least a part (upper 2 to 3 millimetres) of the front side of the lower front. This latter embodiment has the drawback that the retainer body is visible from outside.

In addition, retainer body 3 can also run in a curve substantially parallel to the palate of the upper jaw.

Connecting elements 10 allow that, for instance for plastic body 2, the plastic part 4 can be shifted relative to plastic part 5, and thus also relative to retainer body 3, in a direction substantially parallel to the longitudinal direction of counter-surface 6 corresponding to the chewing surface of the molars of the upper jaw. In this way counter-surface 6 is shifted relative to counter-surface 7 in a direction substantially parallel to the respective longitudinal direction of these counter-surfaces. This shifting can be realized in precise manner by means of known suitable instruments. This applies in analogous manner for plastic body 2'. In this way it is made possible that orthodontic device 1 can be activated or deactivated during the period of the treatment, and can thus be adjusted in accordance with the growth of the jaws, in particular the lower jaw. Because the positions of parts 4 and 5 on the one side and 4' and 5' on the other can be adjusted relative to each other and to retainer body 3 separately of each other via connecting elements 10 and 10', it will be apparent that an asymmetrical growth of the jaws can also be treated. Because parts 4 and 4' are preferably not connected other than indirectly via parts 5 and 5' by retainer body 3, and are thus displaceable independently of each other, an expansion of the upper jaw and/or the upper dental arch can further also be realized.

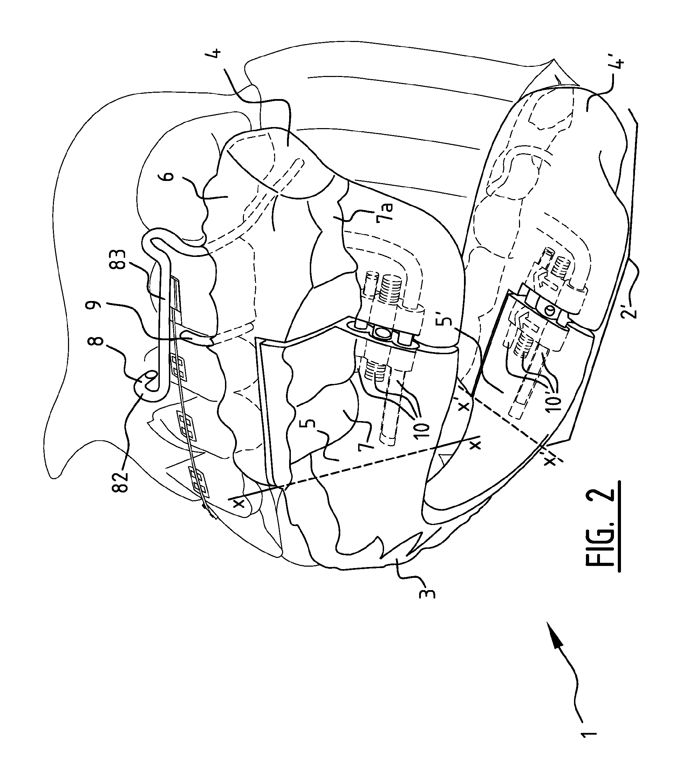

Figure 2 shows substantially a perspective view in which a preferred embodiment of orthodontic device 1 is attached to an upper jaw. In Fig. 2 the teeth of the upper jaw are further provided with fixed appliances. The same numbering of the different components has been used in Fig. 2 as in Fig. 1. Fig. 2 clearly shows for instance plastic parts 4' and 5' forming part of plastic body 2' of the preferred embodiment, wherein part 5' is bounded on a side by line X'-X'. Connecting elements 10' can here also be readily seen, as can counter-surfaces 7 and 7a.

With correct placing in the mouth the activator shown in for instance figures 1 and 2 remains in place (retention of the activator), partly by means of tube bonders 8 and 8 ' and partly through button bonders 9 and 9' . Other methods of retention, for instance by other forms of bonder, are possible. The tube bonders are preferably adapted to engage on fixed appliances. They can engage on fixed appliances. When the activator is placed in the mouth, a tube bonder can hook or snap partially behind the tube which forms part of typical fixed orthodontic appliances which can be arranged on a molar. These fixed appliances serve as a point of engagement for the bonders or attaching means 8 and 8'. These fixed appliances can also be formed here by only a number of components of normally used fixed appliances. It is thus possible for instance to mount only a number of points of engagement for the attaching means on the teeth, instead of for instance on parts of a fully fixed brace comprising brackets.

Another possible form of retention is for instance retention by making use of several button bonders, several tube bonders or a combination of the two, wherein no engagement on fixed appliances takes place. It is however preferably also possible to use these embodiments in combination with fixed appliances.

When the activator is placed in the mouth, the tube bonder can hook behind a tube which forms part of a fixed appliance or which forms a fixed appliance per se or for instance by means of a tube bracket (a bracket comprising tubes) of which it forms part.

When the activator is placed in the mouth, the tube bonder can hook or snap between two tubes, which are attached to for instance a molar (for instance M1) by means of a band or by means of adhesive. Specific frequently used tube brackets moreover comprise two small tubes or tubes; one of these may serve to form the bracket retainer via an orthodontic wire (for instance the upper small tube, which also has for instance a square cross-section), the other to be coupled to an activator or headgear (which has for instance a larger cross-section than the first small tube and has for instance a round cross-section). Because the activator according to embodiments of the present invention hooks or snaps behind a tube of the fixed appliance, there thus always remains an opening free which can be used for other purposes, such as for instance for arranging a headgear device.

In an aspect of the present invention a specific tube bracket is also shown which is adapted on the one hand to be coupled to a fixed appliance (may for instance form part of a bracket retainer) and which is further adapted to be coupled to an orthodontic device as described in aspects of the present invention.

According to preferred embodiments of the present invention, the wire part which runs substantially parallel to the longitudinal direction of the respective counter-surfaces further comprises at least one spring means on its non-freestanding end, which is adapted to generate a spring action when the freestanding end of the wire part is displaced (for instance laterally). This is for instance when it is displaced in a direction running substantially parallel to the longitudinal direction of the respective counter-surface.

The spring means preferably comprises at least one loop in the wire-like bonder (consisting substantially of a curved wire), wherein the loop runs substantially parallel to the longitudinal direction of the respective counter-surface.

The spring means can also comprise a different whole number of loops, such as for instance two, three or more loops, which run substantially parallel to the longitudinal direction of the respective counter-surface. The spring means can consist substantially of a spring, which connects to the rest of the bonder the wire part running substantially parallel to the longitudinal direction of the respective counter-surfaces corresponding to the chewing surface of the molars. This spring can also be fixedly soldered or lasered (attached by means of laser techniques) between two wire elements of the bonder.

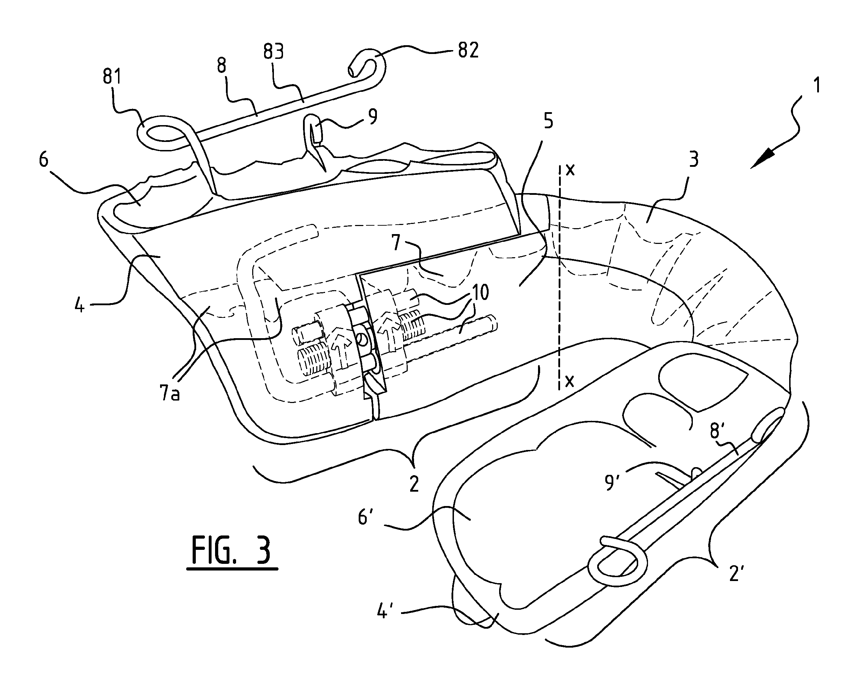

Figure 3 once again illustrates the embodiment according to figure 1, wherein the curved wire-like bonder further comprises a spring means 81 on the non-freestanding end of wire part 83 (with freestanding end 82). The spring means here comprises a loop or winding in the curved wire-like bonder, which connects wire part 83 to the rest of the bonder embedded in respective plastic parts 4 and 4'. The presence of such a spring means allows simple mounting of the bonder on fixed appliances, such as for instance a bracket retainer or part thereof, which is attached fixedly to the teeth, for instance the molars of the upper jaw. The wire part is preferably substantially parallel to the longitudinal direction of the counter-surface corresponding to the molars of the upper jaw. In addition, wire part 83 is preferably also substantially parallel to the longitudinal direction of the outer surface (surface adjacent to the cheek) of the molars in the upper jaw (for instance parallel to the molars or parallel to the premolars) when arranged in the oral cavity. The winding from which the spring means is constructed can be directed outward so that wire part 83 is situated substantially between spring means 81 (the winding) and the rest of the orthodontic device. The spring means can thus protrude or be directed toward the adjacent inner side of the cheek.

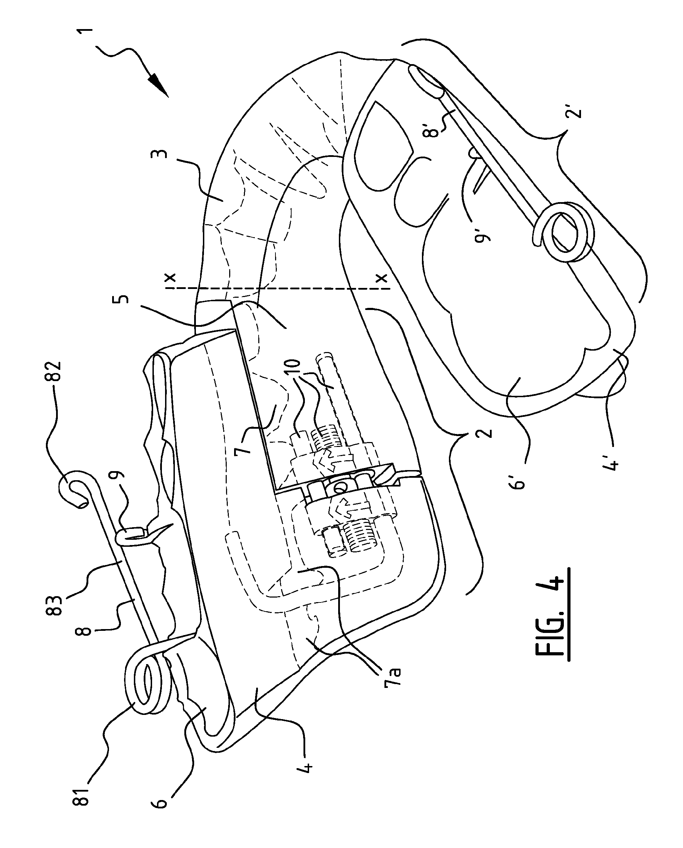

Figure 4 shows a similar embodiment of the present invention, in which spring means 81 comprises more than one loop, i.e. two loops. Here also the loops form, or the spring means forms, a protrusion of the orthodontic device. In alternative embodiments, for instance also applying to figure 3, this winding can also be directed inward relative to wire part 83, and therefore not protrude. In other words, the winding (s) from which the spring means is constructed can be directed inward so that spring means 81 is situated substantially between wire part 83 and the rest of the orthodontic device.

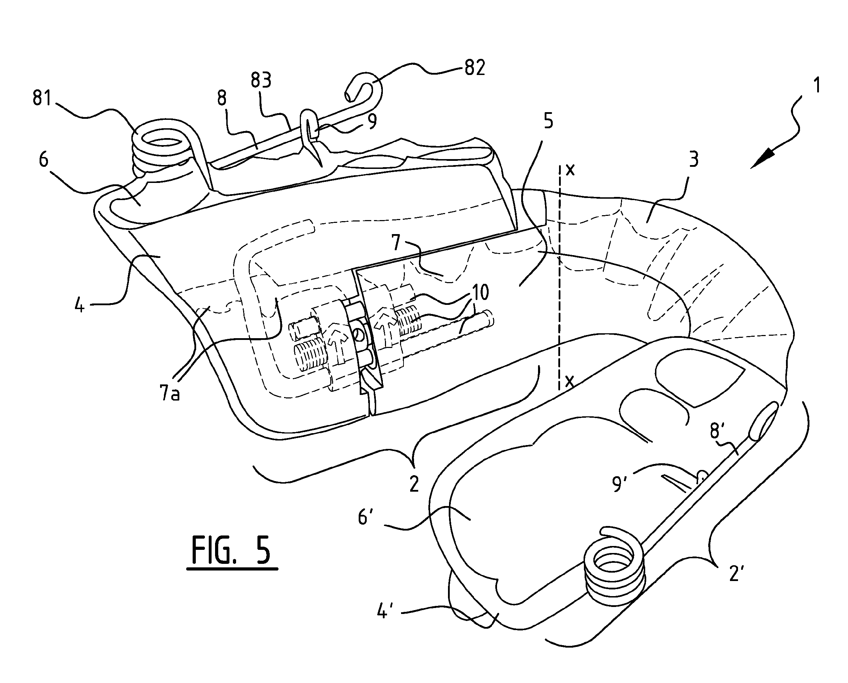

Figure 5 shows a further embodiment of the present invention in which the spring means consists of a small spring, this being a succession of loops together forming a small spring.

The presence of the spring means allows simple placing of the orthodontic device in the mouth and a reliable attachment to the fixed appliances.

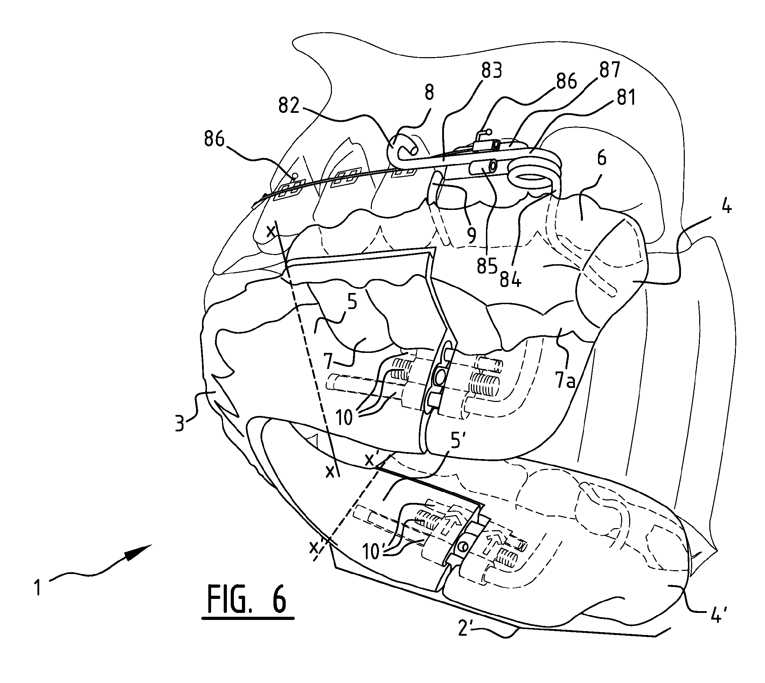

Figure 6 shows an orthodontic device of the type as shown in figure 4, placed in an oral cavity and associated set of teeth. A fully fixed appliance is arranged comprising brackets and tube brackets (85, and, not shown, 85'). Rubber band hooks 86 (and, not shown 86') can optionally also be provided. Tube brackets 85 and 85' are preferably fastened to a molar by means of a band (87, and, not shown, 87') which is clamped or attached around the tooth. The tube bonder engages on the fixed appliance by hooking or snapping behind the lower of the two tubes.

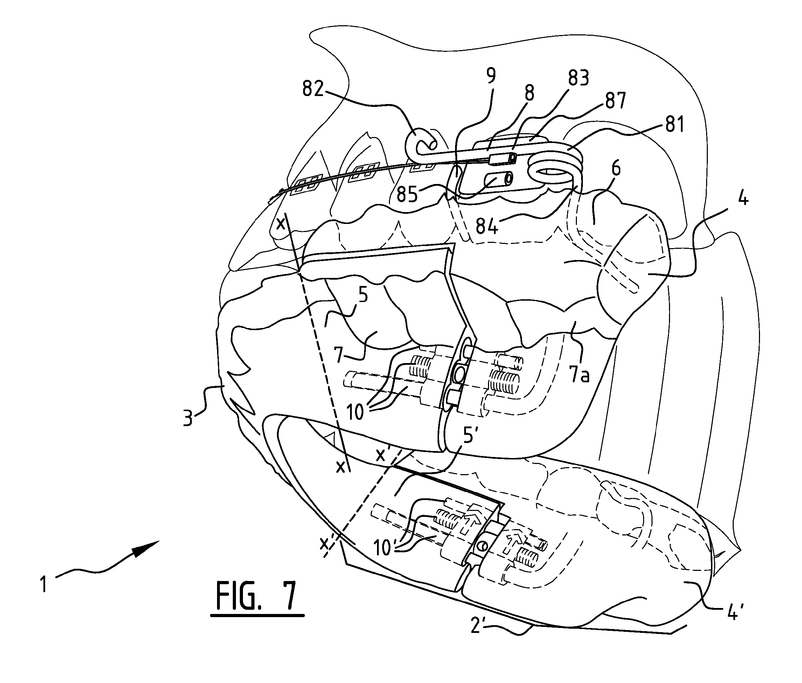

Figure 7 shows an alternative embodiment wherein the bonder engages on the fixed appliance by hooking or snapping behind the upper of the two tubes.

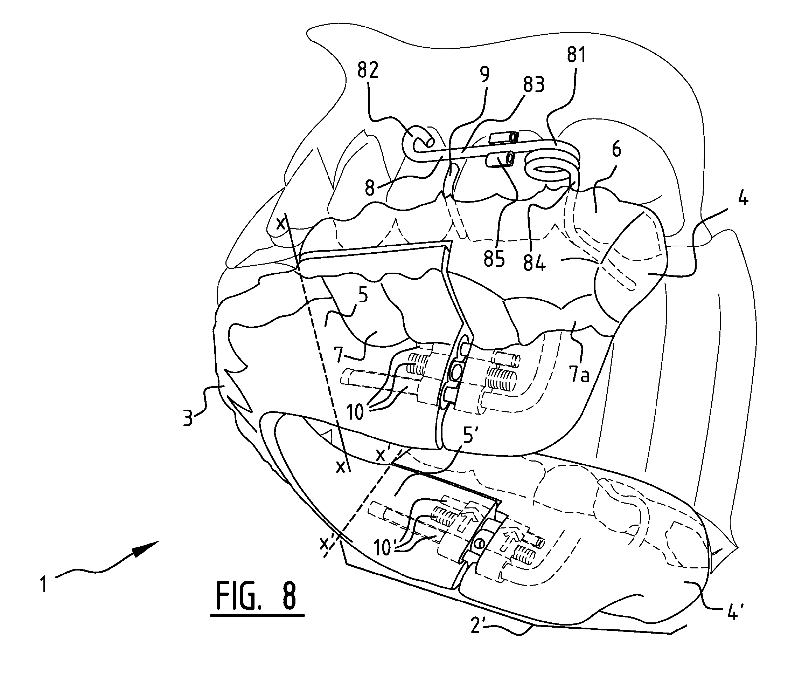

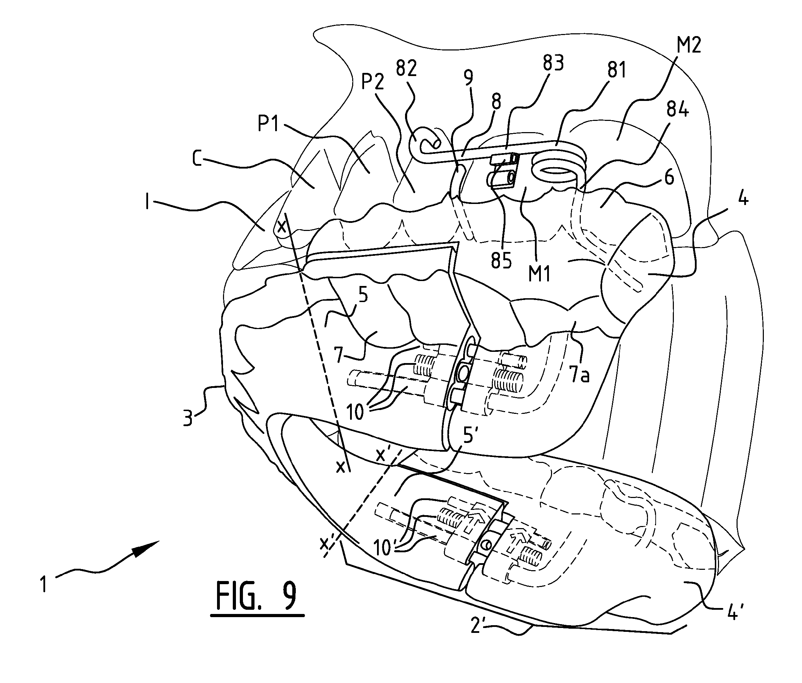

Figures 8 and 9 show embodiments which are similar to the embodiments of respectively figures 6 and 7, but wherein the fixed appliance consists of a tube bracket 85 (and, not shown, 85') on one of the molars (preferably at least one of the molars or premolars). In figure 8 the bonder engages on the fixed appliance by hooking or snapping behind the lower of the two tubes. In figure 9 the bonder engages on the fixed appliance by hooking or snapping behind the upper of the two tubes.

It is noted that the tube bonder comprising a spring means as described above can also be applied in a wider context than the specific activators according to embodiments of the present invention, and that each activator, retainer, bite plate, device for reducing or preventing snoring or other device requiring attachment to a fixed appliance can make use of these resilient bonders.

In an aspect of the present invention a device is described which is adapted for placing in an oral cavity and adapted to modify the tooth position and/or position or form of the lower jaw and/or position of the tongue of a patient (human or animal), which is further adapted to be mounted on fixed appliances by means of one of the resilient bonders as described above.

In an aspect of the present invention a device is described which is placed in an oral cavity which comprises a set of teeth and is adapted to modify the tooth position and/or position or form of the lower jaw and/or position of the tongue of a patient (human or animal), wherein the teeth are further provided with a fixed appliance. As described above, this fixed appliance can be a fully fixed appliance or a part thereof. In preferred embodiments the device is further adapted to be mounted on fixed appliances by means of one of the resilient bonders as described above.

It will be apparent that other embodiments of the activator can be manufactured which can be attached in a different manner to the upper jaw by means of attaching means. Attaching means can thus for instance also comprise adhesives or magnetic parts. According to yet another embodiment, the activator can additionally also be attached to the lower jaw.

In other embodiments of the activator according to the present invention tubes or recesses can further also be arranged on the activator itself, which are intended for attaching of an external brace. These are then preferably placed on the outer side of the plastic bodies.

Different types of plastic or synthetic resin known to the person with ordinary skill in the art can be chosen as plastic material from which the plastic bodies and parts of the activator are substantially manufactured. The activator according to the present invention can further be assembled from a combination of plastic material and metal.

With correct use and correct placing of the activator, which is particularly suitable for use in combination with fixed appliances, it will be apparent that the forces exerted by the jaw muscles (including in the case of for instance bruxism) are transmitted via the molars directly onto the counter-surfaces of the plastic bodies, and are thus absorbed substantially wholly by these plastic bodies. These forces are thus not transmitted to the fixed appliances via the attaching means, which makes the fixed appliances and the attaching means and the activator less susceptible to wear and breakage.

The activator according to embodiments of the present invention is adapted for use in combination with fixed appliances.

It is noted that the use of an activator according to preferred embodiments of the present invention, without the use of an optionally fully fixed appliance, can result in outgrowth of teeth (for instance incisors) in the upper jaw, this usually being undesirable.

Several of the advantages of embodiments of the present invention are as follows:
- being placeable and removable in simple manner by practitioner and patient (fixing and releasing can for instance take place by means of the tongue owing to the attaching direction being substantially vertical relative to the bite surface along which the snapping-in and out is intended to take place);
- it can be activated sagittally in symmetrical and asymmetrical manner;
- it is very strong and can even withstand the effects of bruxism;
- a combination with an appliance of the headgear type is possible because the tubes of the typically used fixed appliances are not used by the activator and are therefore still free for other use.

The activator can be retained by means of bonders in the upper arch. When placed in the mouth the bonders of the activator can slide vertically over the headgear tubes of the fixed appliance (preferably tooth reference M1, although others are not precluded). The preferably further present button bonders slide for instance vertically between teeth M1 and P2. If necessary, the bonders can be adjusted during the first placing of the activator. Once adjusted, the activator will position and fix itself when the mouth is closed in forward direction.

Mutual jaw forces are transmitted onto for instance the synthetic resin of the activator by the (pre)molars. This prevents loading and damage of the metal wire parts, which are necessary only for the anchoring, which does occur in other prior art activators. Even the activators adapted to engage on fixed appliances, such as for instance the so-called EEVA-Activator which must be pushed horizontally into a small tube or tube of a tube bracket when placed in the mouth, have this problem.

Activation of the sagittally placed screws (protruding of the mandible) in the activator must take place gradually in order to allow the upper jaw to widen. This widening is possible, among other reasons, due to the V-shaped arrangement of the screws (as seen caudally/cranially) . After the first activation, which is usually necessary only after several months of wear, the synthetic resin must be smoothed by means of cutting distally of the screws.

Although the principles of the invention are described above on the basis of specific embodiments, it must be clearly understood that this description is given only by way of example and is not limitative for the scope of protection defined by the appended claims.

## Claims

1. Orthodontic device (1) for activating the growth of the lower jaw for use in combination with fixed orthodontic appliances, comprising two plastic bodies (2,2'), each provided with at least one counter-surface corresponding to the chewing surface of molars in the upper jaw (6,6'), and at least one counter-surface corresponding to the chewing surface of molars in the lower jaw (7,7'), and further attaching means (8, 8' , 9 , 9') for attaching to the upper jaw, **characterized in that** each plastic body (2, 2') comprises at least two parts ((4, 5) , (4', 5')) which can be displaced and fixed relative to each other substantially parallel to the longitudinal direction of the respective counter-surfaces, wherein each part is provided with at least one of said counter-surfaces.

2. Orthodontic device as claimed in claim 1, **characterized in that** at least one of the attaching means (8,8') is adapted to engage on fixed appliances.

3. Orthodontic device as claimed in claim 1, **characterized in that** at least one of the attaching means (8,8') engages on fixed appliances.

4. Orthodontic device as claimed in any of the claims 1-3,
**characterized in that** the parts which are only provided with one or more counter-surfaces corresponding to the chewing surface of molars in the lower jaw (5,5') are connected via a retainer body (3).

5. Orthodontic device as claimed in claim 4, **characterized in that** the retainer body is provided with at least one counter-surface corresponding to the teeth of the lower jaw.

6. Orthodontic device as claimed in either of the claims 4 or 5, wherein the plastic parts (5,5') and the retainer body (3) are manufactured integrally.

7. Orthodontic device as claimed in any of the foregoing claims, wherein the plastic parts (5,5') and the retainer body (3) form separate parts attached to each other.

8. Orthodontic device as claimed in any of the foregoing claims 4-7, wherein the retainer body (3) is situated on the lingual side of the front teeth when placed in the mouth.

9. Orthodontic device as claimed in any of the foregoing claims 4-8, wherein the retainer body (3) comprises an overcapping of the lower front.

10. Orthodontic device as claimed in any of the claims 1-9,
**characterized in that** the attaching means (8, 8') comprise curved wire-like bonders, wherein at least one bonder comprises a wire part (83) running substantially parallel to the longitudinal direction of the respective counter-surfaces corresponding to the chewing surface of the molars.

11. Orthodontic device as claimed in claim 10,
**characterized in that** the wire part (83) is substantially parallel to the longitudinal direction of the side surface of the molars or premolars when the activator is placed correctly in the mouth.

12. Orthodontic device as claimed in claim 10 or 11, wherein the wire part (83) which runs substantially parallel to the longitudinal direction of the respective counter-surfaces (6, 6') further comprises at least one spring means (81).

13. Orthodontic device as claimed in claim 12, wherein the spring means (81) comprises at least one loop in the wire, wherein the loop runs substantially parallel to the longitudinal direction of the respective counter-surface (6,6').

14. Orthodontic device as claimed in any of the claims 1-13,
**characterized in that** each plastic body (2,2') comprises two parts ((4, 5) , (4', 5')) which can be displaced and fixed relative to each other substantially parallel to the longitudinal direction of the respective counter-surfaces, and of which one part comprises in each case one counter-surface corresponding to the chewing surface of molars of the upper jaw (6,6') and one counter-surface corresponding to the chewing surface of molars of the lower jaw (7a,7a'), and of which another part comprises in each case one counter-surface corresponding to the chewing surface of molars of the lower jaw (7, 7').

15. Orthodontic device as claimed in any of the claims 1-13, wherein each plastic body is provided with one counter-surface corresponding to the chewing surface of molars in the upper jaw (6,6') and one counter-surface corresponding to the chewing surface of molars in the lower jaw (7, 7'), **characterized in that** each plastic body comprises two parts ((4, 5) , (4', 5')) which can be displaced and fixed relative to each other substantially parallel to the longitudinal direction of the respective counter-surfaces, and of which one part (4, 4') comprises in each case the counter-surface corresponding to the chewing surface of molars of the upper jaw (6, 6'), and of which another part (5, 5') comprises in each case the counter-surface corresponding to the chewing surface of molars of the lower jaw (7, 7')
